(19) Europäisches Patentamt
European Patent Office
Office européen des brevets

(11) Publication number: **0 235 927 A2**

# (12) EUROPEAN PATENT APPLICATION

(21) Application number: 87300746.2

(22) Date of filing: 28.01.87

(51) Int. Cl.[4]: C 08 K 5/34, C 08 L 59/02

(30) Priority: 30.01.86 US 823916

(43) Date of publication of application: 09.09.87 Bulletin 87/37

(84) Designated Contracting States: AT BE CH DE ES FR GB GR IT LI LU NL SE

(71) Applicant: CELANESE CORPORATION, 1211 Avenue of the Americas, New York New York 10036 (US)

(72) Inventor: Yu, Thomas C., 54 Susan Drive, Chatham New Jersey (US)

(74) Representative: De Minvielle-Devaux, Ian Benedict Peter et al, CARPMAELS & RANSFORD 43, Bloomsbury Square, London WC1A 2RA (GB)

## (54) Stabilized oxymethylene polymers.

(57) An oxymethylene polymer composition which exhibits a reduced tendency to form mold deposits upon molding, reduced odor and a reduced tendency to discolor under thermal stress. The composition contains a major proportion of an oxymethylene polymer selected from the group consisting of an oxymethylene homopolymers and copolymers represented by the formula

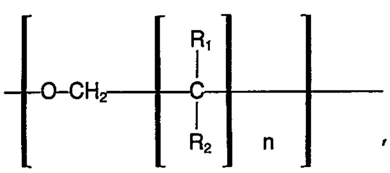

,

and a minor proportion of a stabilizer which is a compound of the formula

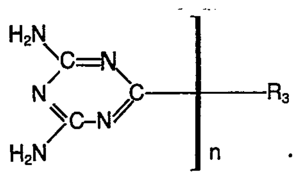

.

EP 0 235 927 A2

# STABILIZED OXYMETHYLENE POLYMERS

## Field of the Invention

The present invention relates to stabilized oxymethylene polymers. More particularly, it relates to stabilized oxymethylene polymers which exhibit a reduced tendency to form mold deposits upon molding, reduced odor and a reduced tendency to discolor under thermal stress.

## Background of the Invention

The term oxymethylene polymer as used herein is meant to include oxymethylene homopolymers and diethers and diesters. Also included are oxymethylene copolymers, which include oxymethylene polymers having at least 60 percent recurring oxymethylene units and at least one other unit derived from a monomer copolymerizable with the source of the oxymethylene units.

Oxymethylene polymers having recurring $-CH_2O-$ units have been known for many years. They may be prepared for example, by the polymerization of anhydrous formaldehyde or by the polymerization of trioxane, which is a cyclic trimer of formaldehyde, and will vary in physical properties such as thermal stability, molecular weight, molding characteristics,color and the like depending, in part, upon their method of preparation, on the catalytic polymerization technique employed and upon the various types of comonomers which may be incorporated into the polymer.

While the high molecular weight oxymethylene polymers are relatively thermally stable, various treatments have been proposed to increase the utility of the polymers by increasing thermal stability. Among these are end capping of hemiformal groups of polyoxymethylene homopolymers and hydrolysis to remove unstable groups of oxymethylene in copolymers containing interspersed stable units, such as ethoxy groups. Even beyond these treatments,

it has been found necessary to incorporate various stabilizers, antioxidants and chain-scission inhibitors into the polymers. Among the most successful and widely used thermal stabilizers are nitrogen containing compounds. These have been found to be effective in lowering the thermal degradation rate of the polymer. However, two problems do arise which make these systems somewhat undesirable for commercial applications. First, there is the amine-like or "fishy" odor encountered during and after molding and second and even more important is the formation of mold deposits which appear to be polymeric and thermoset in nature. This latter problem is of particular importance when small or narrow molded parts are being produced. Removing mold deposits can be difficult and results in much lost time.

One stabilizer system disclosed in the prior art contains a phosphine compound or a tertiary phosphine oxide, an antioxidant and a metal oxide which, when incorporated into an oxymethylene polymer, provides a composition of improved thermal stability, does not emit objectionable odors and when the composition is molded, does not leave mold deposits. Preferably, the composition contains a minor proportion of each of (a) a tertiary phosphine oxide, (b) an alkylene bisphenol antioxidant, and (c) an alkaline earth metal oxide such as MgO.

Another stabilizer system disclosed in the prior art contains a cyclic amidine compound, e.g,having a ring carbon doubly bonded to one ring nitrogen atom and singly bonded to another ring nitrogen atom, and a compound containing both amine and amide groups and having from 0.2 to 5 amide groups per amino nitrogen atom ("amine-amides"). Preferably, both stabilizing compounds are devoid of carbon-to-carbon ethylenic unsaturation.

Preferred cyclic amidine compounds are disclosed to be those containing at least one amidino group per 22 carbon atoms with the residual valence of the amidino group bonded to nitrogen, carbon, oxygen or hydrogen. Particularly suitable compounds are the amine substituted triazines, e.g., amine-substituted derivatives of symmetrical triazines, including melamine (2,4,6-triamino sym.triazines). The amino groups may be primary, secondary or tertiary and other substituents such as hydroxy substituents may be present. Among the specific compounds disclosed to be suitable are 2,4,6-triamino sym.triazine (melamine), N,N-diethyl melamine, phenyl melamine, butyl melamine, N,N-diphenyl melamine, N,N',N"-triphenyl melamine, N,N',N"-trimethylol melamine,2,4- diamino-6-methyl sym. triazine, 2-4-diamino-6-butyl sym. triazine, 2,4-diamino-6-benzyloxy sym.triazine, 2,4-diamino-6-butoxy sym.triazine, 2,4-diamino-6-benzyloxy sym.triazine,2,4-diamino-6-butoxy sym.triazine, 2,4-diamino-6-cyclo-hexyloxy sym.triazine, 2,4-diamino-6-chloro sym.triazine,2,4-diamino-6-mercapto sym.triazine, 2,4-dihydroxy-6-amino sym.triazine (ammelide), 2-hydroxy 4,6-diamino sym.triazine (ammeline) and N,N,N',N' tetracyanoethyl benzoguanamine.

As preferred amine-amides are disclosed compounds wherein the amine groups are tertiary amine groups and wherein there are from one to three amide groups per amino nitrogen atom. Suitable amine-amides include compounds containing the structure $N-R_a-Z-R_b$ wherein $R_a$ is a divalent organic radical having terminal carbon bonds, Z is a

$$(-\overset{\overset{\displaystyle O}{\|}}{C}-NH-)$$

group which may be in any position with respect to the other atoms of the molecule, and $R_b$ is hydrogen or a monovalent organic radical having a terminal carbon bond,e.g., an alkyl or aryl group either unsubstituted or containing only inert substituents. The preferred compounds are compounds in which $R_b$ is hydrogen and the free nitrogen bonds are singly linked to carbon atoms; such compounds

have terminal amide groups, i.e.,

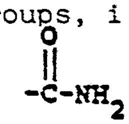

groups and tertiary amino groups. The free nitrogen bonds at the left of the formula in the preferred compounds may be linked to alkyl groups, aryl groups or may be linked through carbon atoms to the other atoms of a heterocyclic ring. The free nitrogen bonds may be linked to additional radicals having amide groups. If desired, the radical linked to the free nitrogen bonds may have one or more additional tertiary amino nitrogen atoms in their skeletons or may even comprise a repeating polymeric structure.

The divalent radical $R_a$ may be an alkylene radical, such as a methylene, ethylene or butylene radical, or an arylene radical, such as a phenylene radical. These radicals may be unsubstituted or may contain substituents which are inert. The divalent radicals may also, if desired, have one or more additional tertiary nitrogen atoms in their skeletons.

Among the specific tertiary amine-amides disclosed to be suitable are nitrilo-tris-beta propionamide; beta (4-morpholinyl) propionamide;N,N-dimethyl-p-carbamyl aniline; 4-dietheylamino- 2-methyl acetanilide and p-diethylamino acetanilide.

It is further disclosed that compositions having particularly good thermal stability in addition to good resistance to discoloration on exposure to heat are prepared by adding to the composition, as a thermal stabilizer and third component, a phenolic compound.

It is also disclosed in the prior art to increase the thermal stability of oxymethylene polymers by incorporating therein at least one amidine compound i.e., a compound having a carbon atom doubly bonded to one nitrogen atom and singly bonded to another.

A preferred class of amidine compounds is disclosed to be the N-substituted amidine compounds wherein another nitrogen atom is singly bonded to the amidino group, most preferably at the carbon atom. Another preferred class of amidine compounds is disclosed to be those in which carbon atom of the amidino group is bonded to another carbon atom, an oxygen atom or an hydrogen atom.

Suitable amidine compounds are disclosed to include the cyano-guanidine compounds including cyano-guanidine, itself, and other compounds including those containing the divalent 1-cyano-3,3guanidino radical :

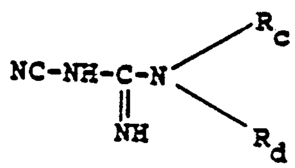

Among the substituted cyanoguanidines which may be used are those having one or two suitable inert substituents at the 3-nitrogen position of the guanidine nucleus. For example, in the above formula, $R_c$ and $R_d$ may be the same or different inert substituents including hydrogen, alkyl , aryl cycloalkyl, hydroxyalkyl, haloalkyl, haloaryl and other substituents. Suitable inert substituents are disclosed to be those which will not induce undesirable reactions. Specific compounds which are disclosed to be suitable include 1-cyano-3-methyl guanidine, 1-cyano-3-ethyl guanidine, 1-cyano-3-isopropyl guanidine,1-cyano-3,3-diphenyl guanidine, 1-cyano-3-hydroxymethyl guanidine, 1-cyano-3-dodecyl guanidine, 1-cyano-3-(2-hydroxyethyl) guanidine, 1-cyano-3-(2-bromoethyl) guanidine 1-cyano-3-(m-chlorophenyl) guanidine and 1,3-dicyanoguanidine.

Yet another stabilizer disclosed in the prior art as useful in stablizing organic substrates, including oxymethylene polymers, against thermo-oxidative degradation is a compound of the formula:

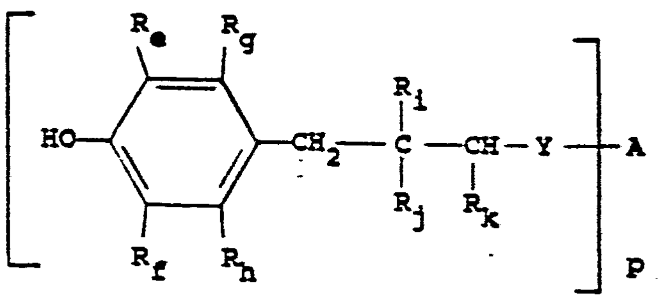

in which $R_e$ and $R_f$ independently of one another denote alkyl, cycloalkyl or aralkyl, $R_g$ denotes hydrogen or, cojointly with $R_e$, denotes tetramethylene, $R_h$ denotes hydrogen or lower alkyl or, conjointly with $R_f$, denotes tetramethylene, $R_i$ denotes hydrogen, alkyl, aralkyl, acyloxyalkyl, oxyalkyl or phenyl, $R_j$ denotes hydrogen, alkyl, phenyl or the group

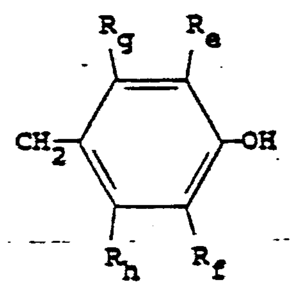

or conjointly with $R_i$, denotes alkylene, $R_k$ denotes hydrogen, alkyl, phenyl, benzyl or alkylphenyl or,conjointly with $R_i$ or $R_j$, denoted alkylene or, conjointly with $R_i$ and $R_j$, denotes alkanetriyl,$R_i$,$R_j$ and $R_k$ together containing at least one carbon atom, Y denotes -O- or -NH-, p denotes 1,2,3, or 4 and A denotes hydrogen or a group which is derived from an organic or inorganic oxy-acid A-(OH)p.

Among the preferred compounds are disclosed to be those in which p is 3-n-n' and A is a radical of the formula

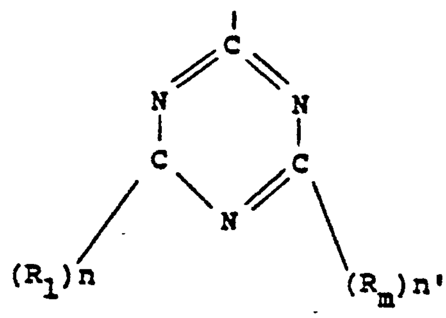

wherein n and n' independently of one another denote 0 or 1 and $R_1$ and $R_m$ independently of one another denote an alkoxy group, a cycloalkoxy group,an aralkoxy group, an aryloxy group, a substituted mercapto group, a substituted amino group or a radical of a heterocyclic group.

While the aforementioned stabilizers are useful, there exists the need for a simple stabilizer for oxymethylene polymers which when incorporated in such polymers reduces the tendency to form mold deposits upon molding, reduces odor and reduces the tendency of such polymers to discolor under thermal stress. The present invention provides an answer to this need.

**Summary of The Invention**

The present invention provides a stabilized oxymethylene polymer composition which exhibits a reduced tendency to form mold deposits upon molding, reduced odor and a reduced tendency to discolor under thermal stress. The composition comprises an oxymethylene polymer selected from the group consisting of an oxymethylene homopolymer and a copolymer thereof represented by the formula

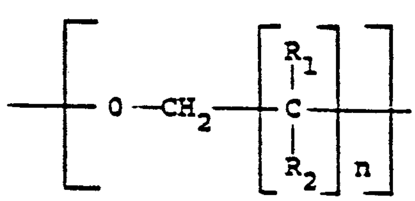

wherein $R_1$ and $R_2$ are each selected from the group consisting of hydrogen, lower alkyl and halogen-substituted lower alkyl radicals, n is an integer of from zero to 5 and wherein n is zero in from 60 to 99.6 percent of the recurring units, having incorporated therein a minor proportion of a stabilizer comprising a compound of the following formula:

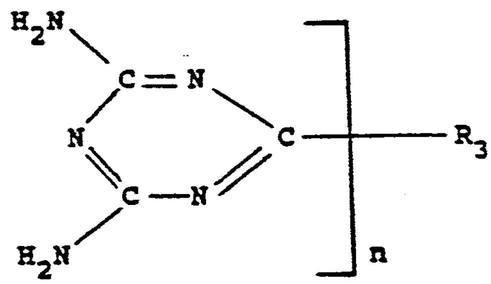

wherein: n is 1 or 2 and when n is 1,$R_3$ is a monovalent radical selected from 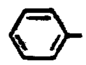,$CH_3$-,$H_3C$-$(CH_2)$8-,$C_2H_5$-,$C_3H_7$-, $(CH_3)_2CH$-, 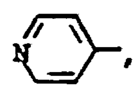, H-, $CH_3(CH_2)_{16}$ and 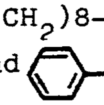$CH_2$-, and when n is 2, $R_3$ is a divalent radical selected from

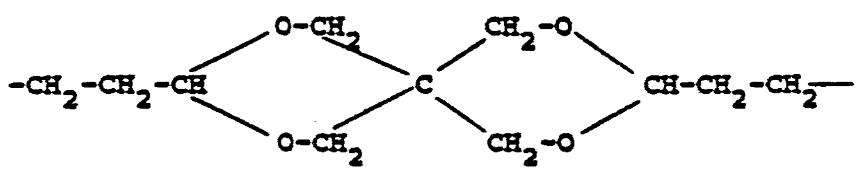

and $-(CH_2)_4-$. Preferably the stabilizer is present in an amount of from about 0.025 to about 5 wt.%, more preferably 0.025 to about 3 wt.%. A preferred stabilizer is benzoguanamine.

**Description Of The Preferred Embodiments**

The oxymethylene polymers useful in the compositions of the present invention include oxymethylene homopolymers and diethers and diesters. Also useful and generally preferred are oxymethylene copolymers, which include oxymethylene polymers having at least 60 percent recurring oxymethylene units and at least one other unit

derived from a monomer copolymerizable with the source of the oxymethylene units. Among the copolymers which are utilized in accordance with this aspect of the invention are those having a structure comprising recurring units having the formula

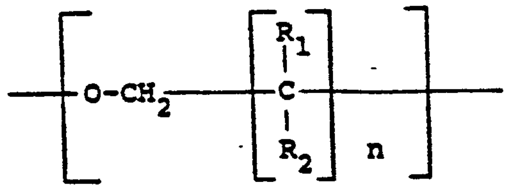

wherein each $R_1$ and $R_2$ is selected from the group consisting of hydrogen, lower alkyl and lower halogen substituted alkyl radicals and wherein n is an integer of from 0 to 5 and wherein n is 0 in from 60 to 99.6 percent of the recurring units.

A preferred class of copolymers are those having a structure comprising recurring units having the formula $(-O-CH_2-(CH_2O)_n-)$ wherein n is an integer from 0 to 2 and wherein n is 0 in from 60 to 99.6 percent of the recurring units. These copolymers are prepared by copolymerizing trioxane with a cyclic ether having the structure

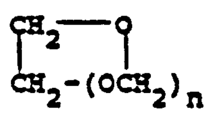

where n is an integer from 0 to 2.

Among the specific cyclic ethers which may be used are ethylene oxide, 1,3-dioxolane, 1.3.5-trioxepane, 1-3-dioxane, trimethylene oxide, pentamethylene oxide, 1,2-propylene oxide, 1,2-butylene oxide, neopentyl formal, pentaerythritol diformal, paraldehyde, tetrahydrofuran, and butadiene monoxide. Particularly preferred is a copolymer prepared by copolymerizing trioxane and ethylene oxide, 1,3-dioxolane or both.

High molecular weight oxymethylene polymers may be prepared in high yields and with rapid reaction rates by the use of catalysts comprising boron fluoride coordinate compounds in which oxygen or sulfur is the donor atom, as described in U.S. Pat. No. 2,986,506.

The copolymers useful in the present invention have typically and preferably been subjected to either solution hydrolysis (hereinafter "SH") or melt hydrolysis (hereinafter "MH") to remove unstable groups. These processes degrade the hemiacetal end groups in the copolymer chain. Both processes are known to those skilled in the art and are in commercial practice. A useful solution hydrolysis process is disclosed in U.S. Pat. No. 3,179,948 and a useful melt hydrolysis process is disclosed in U.S. Pat. No. 3,318,848.

The stabilizers useful in the compositions of the present invention are compounds of the formula

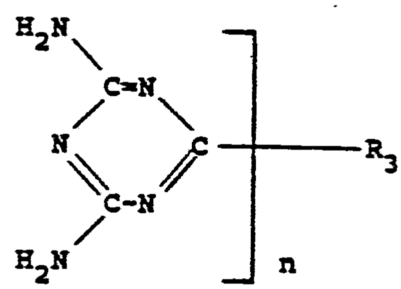

wherein: n is 1 or 2 and when n is 1, $R_3$ is a monovalent radical selected from 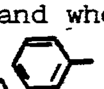, $CH_3-$, $H_3C-(CH_2)_8-$, $C_2H_5-$, $C_3H_7-$, $(CH_3)_2CH-$, 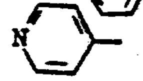, $H-$, $CH_3(CH_2)_{16}-$ and 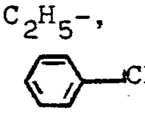$CH_2-$, and when n is 2, $R_3$ is a divalent radical selected from

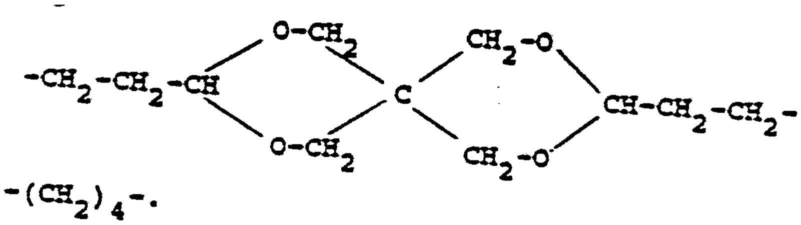

and $-(CH_2)_4-$.

The stabilizer compounds represented by the formula are as follows:

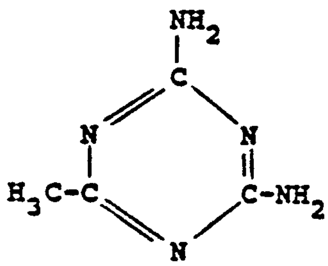 ,

Acetoguanamine

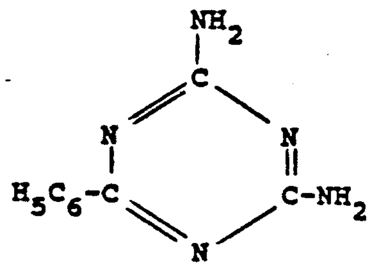 ,

Benzoguanamine

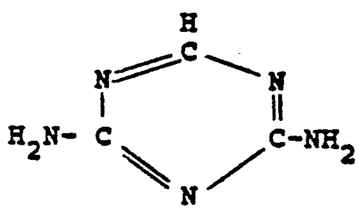

Formoguanamine

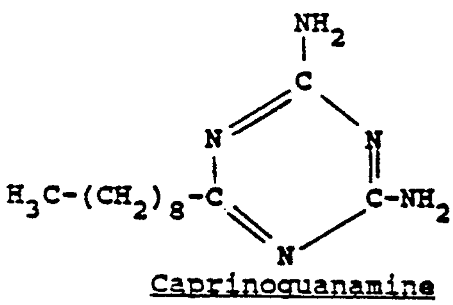 ,

Caprinoguanamine

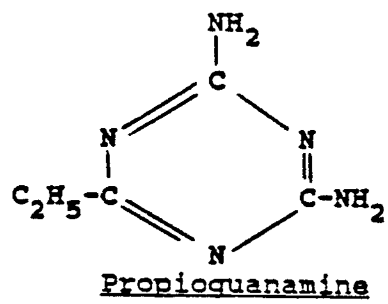 ,

Propioguanamine

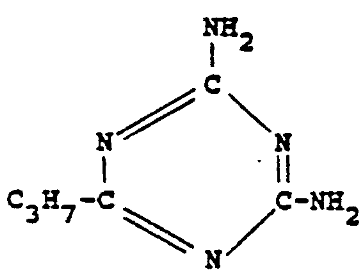 ,

Butyroguanamine

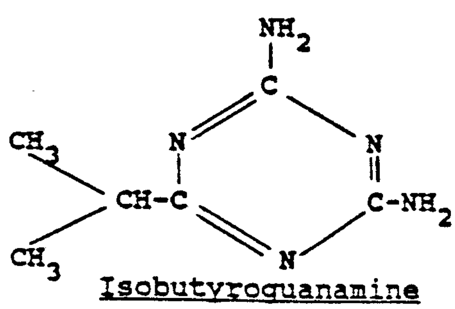 ,

Isobutyroguanamine

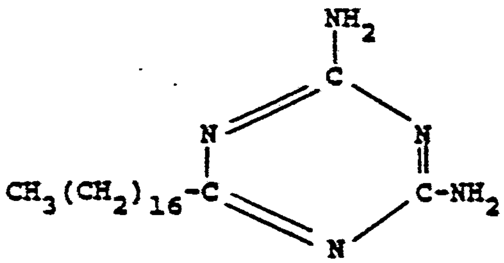 ,

Stearoguanamine

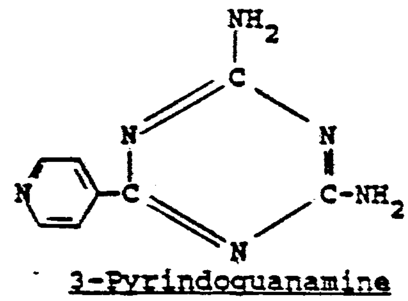

3-Pyrindoguanamine

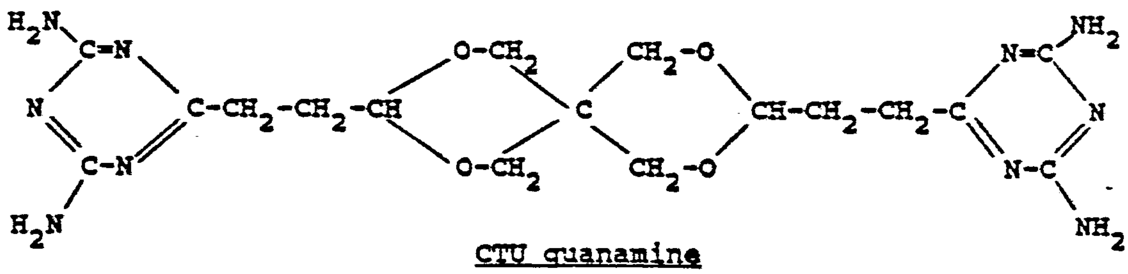

CTU guanamine

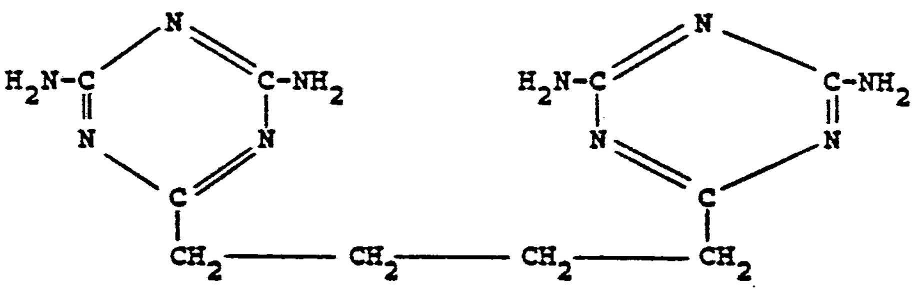

Adipodiguanamine

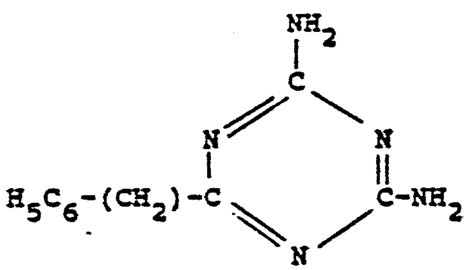

Phenylacetoguanamine

Particularly preferred is benzoguanamine (n=1; $R_3$= 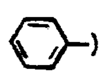).

Preferably, the stabilizer is present in the composition in an amount of from about 0.025 to about 5 wt.%, more preferably about 0.025 to about 3 wt.%. A particularly preferred amount is from about 0.1 to about 0.3 wt.% based on the total weight of the composition. A preferred composition comprises an oxymethylene polymer and benzoguanamine in an amount of from about 0.1 to about 0.3 wt.%.

The compositions of the present invention, as compared to compositions employing melamine

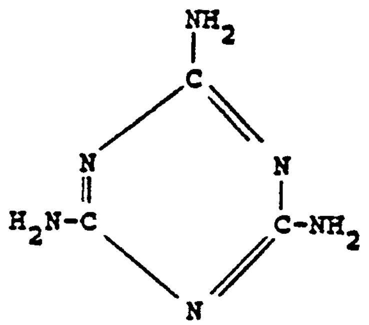

or cyanoguanidine

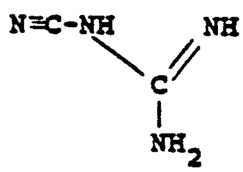

as a stabilizer, demonstrate an improvement in thermal stability, a substantial reduction in molding odor and do not tend to produce mold deposits when used with SH treated oxymethylene copolymers and produce a wipeable mold deposit when used with MH treated oxymethylene copolymers or mixtures of MH treated and SH treated oxymethylene copolymers. Compositions containing melamine or cyanoguanidine tend to produce a thermoset type of mold deposit whether with MH treated, SH treated or mixtures of the two that requires a time consuming scraping of the molds. The present compositions also exhibit a substantial reduction in both extractable formaldehyde and molding odor emission and a reduction

in the MX b color value, a measure of the tendency of the oxymethylene polymer to discolor under thermal stress, as compared to compositions containing cyanoguanidine or melamine. The present compositions also exhibit better regrind color than do compositions containing cyanoguanidine.

The stabilized oxymethylene polymer compositions of the present invention are prepared by admixing the stabilizer with the unstabilized polymer in any suitable manner, whereby a substantially homogenous composition is obtained. For example, the stabilizer may be incorporated into the oxymethylene polymer by dissolving both the polymer and the stabilizer in a common solvent and thereafter evaporating the solution to dryness. Alternatively, the stabilizer may be admixed intimately with the oxymethylene polymer by being applied in solution in a suitable solvent to the finely divided solid oxymethylene polymer followed by evaporation of the solvent.

The admixture may also be made by dry blending the finely divided oxymethylene polymer and finely divided stabilizer followed by extrusion or melt compounding or by milling the stabilizer into the polymer as the latter is worked on a rubber mill.

The stabilized oxymethylene polymer compositions also include if desired, plasticizers, pigments, lubricants and other stabilizers, e.g.,stabilizers against degradation by ultraviolet light, e.g., 2,2'-dihydroxy-4,4'-dimethoxybenzophenone, 2-hydroxy-4-methoxy-benzophenone, 2-hydroxy-4 -methoxy-4'-chloro-benzophenone, nucleants, UV screens and absorbers, polyamides,metal soaps, reinforcers and fillers such as glass,talc,white mica and gold mica, polymeric substances such as ethylene vinyl acetate, polyurethanes, impact modifiers, and color pigments which are compatible with oxymethylene polymers, e.g., red pigments such as azo dye and cadmium sulfide-cadmium selenide reds and

"Mercadium" reds, blue pigments such as phthalocyanine blues, green pigments such as chromium oxide greens,white pigments such as titanium dioxide whites, and black pigments such as carbon blacks which can be incorporated in amounts of up to about 5% by weight, based upon the total weight of the composition.

**Examples**

The following examples present illustrative but non-limiting embodiments of the present invention. Unless otherwise stated, the oxymethylene polymers used in the following examples are oxymethylene copolymers of trioxane and ethylene oxide which were prepared as described in Example 1 of U.S. Pat.3,254,053. Catalyst residues in the polymer were deactivated with an amine as described in U.S. Pat. 2,989,509, and the copolymers were then subjected to either the mely hydrolysis process or the solution hydrolysis process as described in U.S. Pat. 3,318,848 and U.S. Pat. 3,174,948, to remove unstable terminal units.

The various analyses referred to in the examples were conducted as follows:

**MOLD DEPOSIT:** is evaluated by repeated injection of 435-440°F molten oxymethylene polymer into a 4 inch diameter by 1/16 inch thickness cavity. Two sets of mold temperatures were used to study the mold deposit propensity. The 150° F low mold temperature was selected to study mold deposit buildup due to condensation of free formaldehyde and stabilizer exudation. At the 200° F high mold temperature formaldehyde condensation did not occur and the mold deposit was mainly stabilizer related. In order to build up a sufficient amount of mold deposit for observation,700 cycles and 3000 cycles are conducted for the low mold temperature and high mold temperature respectively. All samples are dried at 180°F for 4 hours before testing to assure uniformity of moisture content. During mold deposit testing, the disc mold cavity is inspected every 50 shots for the initial 250 shots, and subsequently every 100 shots.

Mold deposit is described to be light (crescent shaped buildup around the gate), medium (annular buildup inside the disc cavity), and heavy (uniform buildup inside the disc cavity). At various times, a portion of the mold cavity is wiped with a cloth soaked with NOXON, a liquid metal polish manufactured by Boyle-Midway. The NOXON coating is allowed to remain on the mold surface for three minutes before wiping. If the mold deposit could not be removed by the application of NOXON, it was recorded as intractable.

**EXTRACTABLE FORMALDEHYDE:** is measured by boiling 100 grams of sample in 100 ml of distilled water at reflux for 60 minutes. The extract is then neutralized with potassium hydroxide (0.1N) solution and the final pH is noted. Fifty milliliters of sodium sulfite (0.1N) solution is added to the extract. This final solution is then titrated with sulfuric acid (0.1N) to the original pH level noted previously. An extractable formaldehyde value is calculated from the following formula:

$$\% \text{ extractable formaldehyde} = (T \times N \times 3)/W$$

where

T = milliliters of sulfuric acid
N = normality of sulfuric acid
W = exact sample weight in grams

MX COLOR : is measured by holding a few grams of oxymethylene polymer sample for 30 minutes at 230°C in a melt indexer. The sample was then extruded and compression molded into a 1/8 inch thickness plague to determine the b color change using a Hunter Colorimeter. The test measures the discoloration tendency of the resin as experienced by the molder.

**MELT FLOW INDEX:** is measured with an Extrusion Plastometer (Melt Indexer). The procedure is essentially equivalent to ASTM D-1238-73. The unit measures the flow rate for ten minutes of oxymethylene polymer melt through a 0.0825 inch diameter by 0.315 inch length capillary at 190°C from a 0.376 inch diameter cylinder under a 2,160 grams dead weight.

**THERMAL GRAVIMETRIC ANALYSIS (TGA):** is a measure of the combined thermal and oxidative degradation tendency of the oxymethylene polymer. The experiment is conducted using a Netzsch 409 Thermal Analyzer manufactured by Netzsch-Geratebau GmbH, West Germany and distributed through Netzsch, Inc., Exton, Pennsylvania. A sample of 20-30 mesh size is prepared by cyrogenic grinding. One gram of sample is placed in an aluminium oxide test crucible inside the test chamber. An air flow of 130 mls per minutes is next introduced into the chamber to serve as both the carrier gas and the oxidative agent. The test chamber is heated at a constant heating rate of 5 degrees centigrade per minutes from room temperature to 275° C, and the weight loss versus temperature is recorded using a strip chart recorder. Initially, the weight loss versus temperature is a straight line with a slight negative slope. A sudden slope change is registered when all the stabilizers are consumed, and the sample undergoes accelerated decomposition. The temperature at the slope change is recorded as the degradation induction temperature. In addition, the weight loss in the 110°C to 220°C range is also noted. These two parameters are used to compare the thermal-oxidative stabilities of various samples.

**MOLDING ODOR:** is measured by storing four 1/2" by 1/8" by 5" flexural bars and four 2" by 1/8" discs in a one pint Mason jar immediately after molding. The jar is sealed tight with a double lid, and stored in a styrofoam enclosure for two hours to allow formaldehyde emission to reach equilibrium. A 5 mls gas sample is drawn from the sample jar, and injected into a Perkin-Elmer Model F-45 gas chromatograph

equipped with a thermal conductivity detector, to determine the formaldehyde concentration in the sample gas.

THE THERMAL DEGRADATION RATE OF THE POLYMER($K_{D230}$): is measured by determining the percent weight loss of a sample of the polymer heated in an open vessel in a circulating air oven at 230°C. For example, the $K_{D230}$ of an unstabilized oxymethylene copolymer of trioxane and ethylene oxide, which was subjected to hydrolysis to remove unstable end groups, is well over 1 percent per minute and generally results in a complete loss after 45 minutes at 230°C.

Example 1

Compositions A through I were prepared by mixing the components in a Henschel mixer and then extruding the mixture using a 1½" Johnson single screw extruder. Three different oxymethylene polymer compositions were used. One was 100% MH copolymer (melt hydrolysis polymer) with a Melt Flow Index of 9.8, and the second was 100% of the SH copolymer (solution hydrolysis polymer) with a Melt Flow Index of 8.6, and the third was a mixture comprising 50% of MH copolymer and 50% SH copolymer. All compositions contained a conventional hindered-phenol type antioxidant, a mold release agent and a nucleant in amounts typically employed by those skilled in the art to which the present invention pertains. Cyanoguanidine ("CNG") was used as a comparative stabilizer. Benzoguanamine ("BZG") was used in the compositions exemplary of the present invention. The extrudate was chopped and subjected to the following analyses: Molding Odor, TGA (induction temperature and weight loss), Kd, Melt Flow Index, Extractable Formaldehyde, and MX b Color. These analyses were conducted as described above. The results are summarized below in Tables 1 through 7.

Table 1

| Composition | Stabilizer | | Molding Odor PPM of Formaldehyde SH/MH, Wt.% 0/100 | 50/50 | 100/0 |
|---|---|---|---|---|---|
| A | 0.1% | CNG* | 1,830 | 2,513 | 1,656 |
| B | 0.025% | BZG | ----- | ----- | ----- |
| C | 0.050% | BZG | ----- | ----- | ----- |
| D | 0.075% | BZG | 2,435 | 1,240 | 1,096 |
| E | 0.1% | BZG | 1,011 | 1,072 | 886 |
| F | 0.2% | BZG | 731 | 695 | 499 |
| G | 0.3% | BZG | 735 | 584 | 427 |
| H | 0.4% | BZG | 797 | 517 | 404 |

* Comparative

Table 2

| Composition | Stabilizer | | TGA Induction Temp., °C SH/MH, -Wt.% 0/100 | 50/50 | 100/0 |
|---|---|---|---|---|---|
| A | 0.1% | CNG* | 240.9 | 240.9 | 250.9 |
| B | 0.025% | BZG | 241.0 | 249.5 | 256.3 |
| C | 0.05% | BZG | 241.0 | 249.5 | 258.2 |
| D | 0.075% | BZG | 249.0 | 251.8 | 256.3 |
| E | 0.1% | BZG | 244.5 | 249.5 | 251.4 |
| F | 0.2% | BZG | 244.5 | 246.4 | 253.6 |
| G | 0.3% | BZG | 248.2 | 253.6 | 254.5 |
| H | 0.4% | BZG | 231.0 | 245.4 | 257.3 |

*Comparative

Table 3

| Composition | Stabilizer | | TGA Wt. Loss 110 to 220°C SH/MH.Wt.% 0/100 | 50/50 | 100/0 |
|---|---|---|---|---|---|
| A | 0.1% | CNG* | 0.08 | 0.15 | 0.02 |
| B | 0.025% | BZG | 0.06 | 0.032 | 0.012 |
| C | 0.050% | BZG | 0.05 | 0.017 | 0.018 |
| D | 0.075% | BZG | 0.011 | 0.039 | ----- |
| E | 0.1% | BZG | 0.1 | 0.04 | 0.05 |
| F | 0.2% | BZG | 0.05 | 0.05 | ----- |
| G | 0.3% | BZG | 0.04 | 0.02 | 0.02 |
| H | 0.4% | BZG | 0.18 | 0.1 | 2.6 |

* Comparative

Table 4

| Composition | Stabilizer | | Kd SH/MH.Wt.% 0/100 | 50/50 | 100/0 |
|---|---|---|---|---|---|
| A | 0.1% | CNG* | 0.018 | 0.019 | 0.014 |
| B | 0.025% | BZG | 0.023 | 0.021 | 0.016 |
| C | 0.050% | BZG | 0.025 | 0.019 | 0.019 |
| D | 0.075% | BZG | 0.021 | 0.016 | 0.019 |
| E | 0.1% | BZG | 0.021 | 0.017 | 0.017 |
| F | 0.2% | BZG | 0.023 | 0.017 | 0.014 |
| G | 0.3% | BZG | 0.019 | 0.015 | 0.015 |
| H | 0.4% | BZG | 0.021 | 0.016 | 0.014 |

* Comparative

Table 5

| Composition | Stabilizer | | Melt Flow Index SH/MH,Wt.% 0/100 | 50/50 | 100/0 |
|---|---|---|---|---|---|
| A | 0.1% | CNG * | 10.2 | 8.7 | 8.9 |
| B | 0.025% | BZG | 9.8 | 9.0 | 8.2 |
| C | 0.05% | BZG | 9.8 | 9.1 | 8.3 |
| D | 0.075% | BZG | 9.8 | 9.2 | 8.4 |
| E | 0.1% | BZG | 9.9 | 9.2 | 8.5 |
| F | 0.2% | BZG | 9.9 | 9.3 | 8.7 |
| G | 0.3% | BZG | 9.8 | 9.2 | 8.6 |
| H | 0.4% | BZG | 9.9 | 9.4 | 8.9 |

*Comparative

Table 6

| Composition | Stabilizer | | Extractable Formaldehyde SH/MH.Wt.% 0/100 | 50/50 | 100/0 |
|---|---|---|---|---|---|
| A | 0.1% | CNG* | 0.018 | 0.022 | 0.010 |
| B | 0.025% | BZG | 0.017 | 0.014 | 0.009 |
| C | 0.05% | BZG | 0.017 | 0.016 | 0.010 |
| D | 0.075% | BZG | 0.016 | 0.016 | 0.008 |
| E | 0.1% | BZG | 0.016 | 0.013 | 0.008 |
| F | 0.2% | BZG | 0.015 | 0.009 | 0.009 |
| G | 0.3% | BZG | 0.018 | 0.011 | 0.006 |
| H | 0.4% | BZG | 0.017 | 0.011 | 0.009 |

* Comparative

Table 7

| Composition | | | MX b Color SH/MH.Wt.% | | |
|---|---|---|---|---|---|
| | | | 0 | 50 | 100 |
| A | 0.1% | CNG* | 18.1 | 20.5 | 11.4 |
| B | 0.025% | BZG | 3.8 | 4.2 | 4.4 |
| C | 0.050% | BZG | 4.6 | 3.9 | 4.3 |
| D | 0.075% | BZG | 6.1 | 5.2 | 4.8 |
| E | 0.1% | BZG | 4.8 | 4.3 | 3.4 |
| F | 0.2% | BZG | 3.2 | 2.7 | 3.3 |
| G | 0.3% | BZG | 2.2 | 2.3 | 2.9 |
| H | 0.4% | BZG | 2.5 | 2.0 | 2.6 |

*Comparative

The 100% SH results were found to be better than the 100% MH results. This is believed to be due to a more thorough removal of polymerization impurities when the SH process is used. The 50/50 MH/SH mixture behaves, in general, intermediate between 100% SH and 100% MH. Table 2 shows a difference of 10°C in TGA induction temperature between MH and SH polymers. Substitution of 0.1% CNG with 0.1% BZG in all three polymers produces comparable (to slightly higher) TGA induction temperature. The same conclusion holds true for the TGA weight loss data and Kd results shown in Table 3 and 4. The thermal stability of the BZG stabilized polymer is therefore comparable to the CNG control. The Melt Flow Index results, which measure the melt flow index perservation as a means of gauging thermal stability, as shown in Table 5, also reinforce this conclusion.

Two distinct advantages of BZG over the CNG control are observed. They are reduced MX b color and molding odor. As shown in Table 7, the MX b color values of BZG stabilized compositions varying in BZG level from 0.025% to 0.4% are about 6 or less regardless of the MH/SH ratio in comparison with the about 10 to 18 MX b values

for the 0.1% CNG control. A substantial reduction in MX b color is noticed when the amount of BZG increases from 0.1% to 0.2% to 0.4% for the 100% MH and 50/50 MH/SH polymers. On the other hand, only a slight reduction in MX b color is noticed at higher than 0.1% BZG concentrations in SH polymer. The molding odor results summarized in Table 1 show that at identical 0.1% levels, BZG stabilized polymers are lower in formaldehyde emission. A drastic reduction in formaldehyde emission is observed when the BZG level is increased from 0.1% to 0.2%, and further increases in the amount of BZG do not produce less molding odor. The extractable formaldehyde results, as shown in Table 6, which is another measure of formaldehyde odor, also support the conclusions based on molding odor. It is possible to achieve some reduction in molding odor by using increased amounts of CNG, however, this action greatly enhanced the tendency of CNG to plate out and form intractable mold deposit.

__Example 2__

Compositions J through V were prepared using different ratios and the MH and SH copolymers described in Example 1 and were mixed and extruded as described in Example 1. BZG,CNG and melamine ("MEL") were used as the stabilizers. Each composition was molded numerous times as summarized below and mold deposit was evaluated as discussed above. The results are summarized below in Tables 8 and 9. The mold deposit testing shown in Table 8 was conducted at low mold temperature (150°F) in order to accumulate both formaldehyde condensation and stabilizer exudation products. All the BZG compositions show wipeable mold deposit using NOXON as the cleansing agent. The 0.1% CNG control, in contrast, produced more mold deposit, and the nature of the mold deposit is thermoset, which cannot be cleansed by application of NOXON. A razor blade was required to scrape away the mold deposit, an extremely slow and painstaking exercise.

Table 9 shows the mold deposit results conducted at high mold temperature (200°F) to measure the mold deposit propensity of the stabilizer additives. The higher molecular weight amidine compound, MEL (M.W.126) is used in place of the lower molecular weight amidine compound, CNG (M.W. 84) to reduce exudation tendency. BZG with a molecular weight of 187, as shown in Table 9, outperforms MEL in mold deposit. For 100% SH, the BZG composition produced no mold deposit whereas the MEL control produced intractable mold deposit. Similar results were obtained using the 50/50 MH/SH polymer feed. The BZG composition produced less mold deposit than the MEL control and the MEL type of mold deposit again required the use of a razor blade for removal whereas in comparison, the BZG type of mold deposit was removed with NOXON.

Table 8

ACCELERATED MOLD DEPOSIT

LOW MOLD TEMPERATURE (150°F) - 700 SHOTS

| COMPOSITION | COPOLYMER COMPOSITION | STABILIZER | MOLD DEPOSIT LIGHT | MOLD DEPOSIT MEDIUM | MOLD DEPOSIT HEAVY | MOLD DEPOSIT REMOVAL |
|---|---|---|---|---|---|---|
| I | 50/50 MH/SH | 0.1% CNG[1] | 75 | 150 | 350 | RAZOR BLADE[2] |
| J | 30/70 MH/SH | 0.1% BZG | 450 | NONE | NONE | NOXON[3] |
| K | 50/50 MH/SH | 0.1% BZG | 200 | 550 | NONE | NOXON |
| L | 70/30 MH/SH | 0.1% BZG | 100 | 250 | 500 | NOXON |
| M | 30/70 MH/SH | 0.3% BZG | 200 | 550 | NONE | NOXON |
| N | 50/50 MH/SH | 0.3% BZG | 350 | 400 | 550 | NOXON |
| O | 70/30 MH/SH | 0.3% BZG | 150 | 250 | 400 | NOXON |

1. Comparative
2. It was necessary to scrape the mold with a razor blade in order to remove the mold deposit.
3. NOXON is a liquid metal polish manufactured by Boyle-Midway. The mold deposit was readily removed by rubbing the NOXON coated surface with a rag.

TABLE 9

ACCELERATED MOLD DEPOSIT

HIGH MOLD TEMPERATURE (200°F) - 3,000 SHOTS

| COPOLYMER COMPOSITION | COMPOSITION | SCAVENGER | MOLD DEPOSIT LIGHT | MOLD DEPOSIT MEDIUM | MOLD DEPOSIT HEAVY | MOLD DEPOSIT REMOVAL 500 | MOLD DEPOSIT REMOVAL 1,000 | MOLD DEPOSIT REMOVAL 1,500 | MOLD DEPOSIT REMOVAL 3,000 |
|---|---|---|---|---|---|---|---|---|---|
| P | 100% SH | 0.3% BZG | NONE | NONE | NONE | NONE | NONE | NONE | NONE |
| Q | 100% SH | 0.3% MEL[1] | 700 | NONE | NONE | NOXON[3] | NOXON/ RAZOR[4] | NOXON/ RAZOR | RAZOR |
| R | 50/50 MI/SH | 0.3% BZG | 900 | 1,300 | NONE | NOXON | NOXON | NOXON | NOXON |
| S | 50/50 MI/SH | 0.3% MEL[1] | 400 | 600 | 1,300 | NOXON | NOXON | RAZOR | RAZOR |
| T | 100% MI | 0.3% BZG | 1,700 | NONE | NONE | NOXON | NOXON | NOXON | NOXON |
| U | 100% MI | 0.3% MEL[1] | 1,700 | NONE | NONE | NOXON | NOXON | NOXON | ——[2] |

1. Comparative
2. Stopped after 1,800 Shots.
3. NOXON is a liquid metal polish, manufactured by Boyle-Midway. The mold deposit was readily removed by rubbing the NOXON coated surface with a rag.
4. It was necessary to scrape the mold with a razor blade in order to remove the mold deposit.

**Claims :**

1. An oxymethylene polymer composition which comprises an oxymethylene polymer selected from the group consisting of an oxymethylene homopolymer and a copolymer thereof represented by the formula

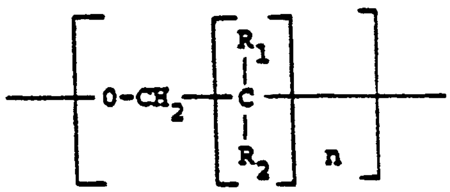

wherein $R_1$ and $R_2$ are each selected from the group consisting of hydrogen, lower alkyl and halogen-substituted lower alkyl radicals, n is an integer of from zero to 5 and wherein n is zero in from 60 to 99.6 percent of the recurring units, said polymers having incorporated therein a minor proportion of a stabilizer comprising a compound of the formula

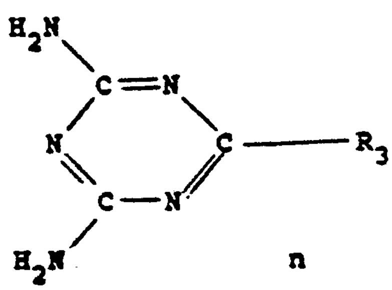

wherein: n is 1 or 2 and when n is 1, $R_3$ is a monovalent radical selected from 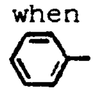 $CH_3-$, $H_3C-(CH_2)_8-$, $C_2H_5-$, $C_3H_7-$, $(CH_3)_2CH-$, 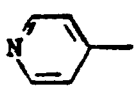 , $H-$, $CH_3(CH_2)_{16}-$ and 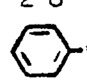$-CH_2-$, and when n is 2, $R_3$ is a divalent radical selected from

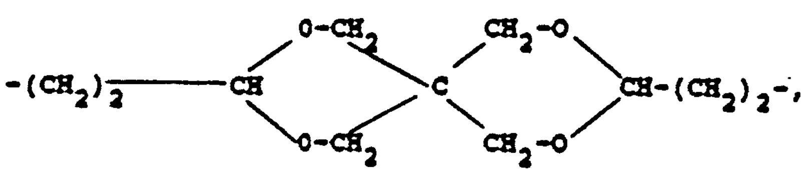 and

$-(CH_2)_4-$.

2. The composition of claim 1 wherein the stabilizer is present in an amount of from about 0.025 to about 5 wt.% based on the total weight of the composition.

3. The compostion of claim 2 wherein the stabilizer is present in an amout of from about 0.025 to about 3 wt.%.

4. The composition of claim 3 wherein the stabilizer is present in an amount of from about 0.1 to about 0.3 wt.%.

5. The composition of claim 1 wherein n is 1 and R is 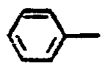 .

6. The composition of claim 1 wherein the oxymethylene polymer is a copolymer.

7. The composition of claim 6 wherein the copolymer is a copolymer of trioxane and ethylene oxide, 1,3-dioxolane or both.

8. An oxymethylene polymer composition which comprises an oxymethylene polymer selected from the group consisting of an oxymethylene homopolymer and copolymer thereof represented by the formula

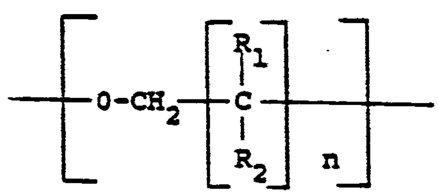

wherein $R_1$ and $R_2$ are each selected from the group consisting of hydrogen, lower alkyl and halogen-substituted lower alkyl radicals, n is an integer of from zero to 5 and wherein n is zero in from 60 to 99.6 percent of the recurring units, said polymers having incorporated therein from about 0.025 to about 5 wt.%, based on the total weight of the composition, of a stabilizer comprising a compound of the formula

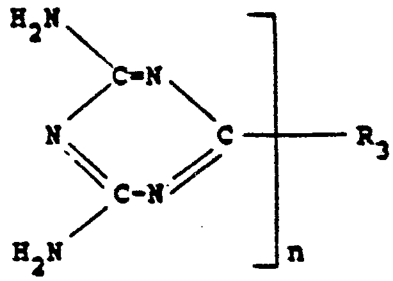

wherein: n is 1 or 2 and when n is 1,$R_3$ is a monovalent radical selected from 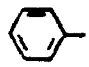, $CH_3$-, $H_3C-(CH_2)_8$-, $C_2H_5$-,$C_3H_7$-, $(CH_3)_2CH$-, 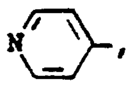, ,H-, $CH_3(CH_2)_{16}$-, 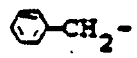, and when n is 2, $R_3$ is the divalent radical

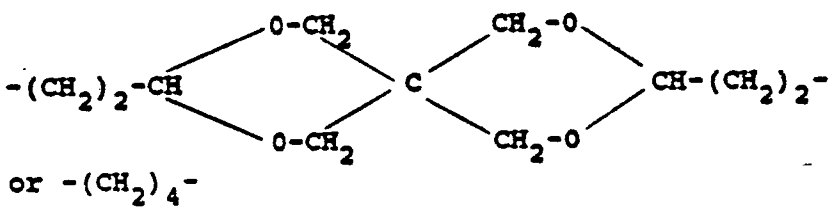 ,

or $-(CH_2)_4-$

9. The composition of claim 8 wherein the stabilizer is present in an amount of from about 0.025 to about 3 wt.%.

10. The composition of claim 9 wherein the stabilizer is present in an amount of from about 0.1 to about 0.3 wt.%.

11. The composition of claim 8 wherein n is 1 and $R_3$ is 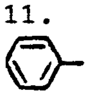.

12. The composition of claim 8 wherein the oxymethylene polymer is a copolymer.

13. The composition of claim 12 wherein the copolymer is a copolymer of trioxane and ethylene oxide, 1,3-dioxolane or both.

14. An oxymethylene polymer composition which comprises an oxymethylene polymer selected from the group consisting of an oxymethylene homopolymer and a copolymer thereof represented by the formula

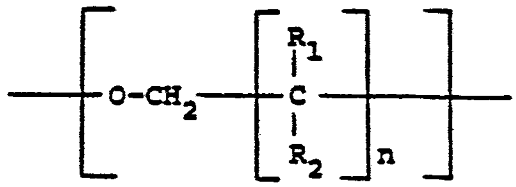

wherein $R_1$ and $R_2$ are each selected from the group consisting of hydrogen, lower alkyl and halogen-substituted lower alkyl radicals, n is an integer of from zero to 5 and wherein n is zero in from 60 to 99.6 percent recurring units, the polymer having incorporated therein as a stabilizer, a minor proportion of benzoguanamine.

15. The composition of claim 14 wherein the stabilizer is present in an amount of from about 0.025 to about 5 wt.%.

16. The composition of claim 15 wherein the stabilizer is present in an amount of from about 0.025 to about 3 wt.%.

17. The composition of claim 16 wherein the stabilizer is present in an amount of from about 0.1 to about 0.3 wt.%.

18. The composition of claim 14 wherein the oxymethylene polymer is a copolymer.

19. The composition of claim 18 wherein the copolymer is a copolymer of trioxane and ethylene oxide,1,3-dioxolane or both.